# EUROPEAN PATENT APPLICATION

(11) **EP 1 343 100 A2**
(43) Date of publication of application: **10.09.2003**
(21) Application number: 03251382.2
(22) Date of filing: 07.03.2003
(51) Int. Cl.: G06F 17/30

(54) **System and method for harvesting community knowledge**

(30) Priority: 07.03.2002 US 93658
(71) Applicant: Hewlett-Packard Company, Palo Alto, CA 94304 (US)
(72) Inventor: Adar, Eytan, Menlo Park, CA 94025 (US); Lukose, Rajan Mathew, CA 94301 (US); Tyler, Joshua Rogers, Stanford., CA 94305 (US); Sengupta, Caesar, Los Altos., CA 94024 (US); Huberman, Bernardo, Palo Alto., CA 94301 (US)
(74) Representative: Tollett, Ian

(57) **Abstract**

A privacy-preserving system and method is disclosed for knowledge management. The method of the present invention discloses steps for receiving and processing messages using scoring techniques and/or filtering techniques. The method of the present invention further includes a method for generating and obtaining responses to messages using scoring techniques and/or filtering techniques. The system of the present invention, includes all means for implementing the method.

## Description

The present invention relates generally to a method for knowledge management, and more particularly for harvesting community knowledge.

Satisfying information needs in a diverse, heterogeneous information environment is challenging. In order to even begin the process of finding information resources or answers to questions, individuals typically must know either where to look, or whom to ask. This is often a daunting task, especially in large enterprises where many of the members will not know each other, nor be aware of all the information resources potentially at their disposal.

Current systems for storing information and/or organizational expertise include Knowledge Databases (K-bases), such as document repositories and corporate directories, and Knowledge Management systems, which rely on users to explicitly describe their personal information, knowledge, and expertise to a centralized K-base.

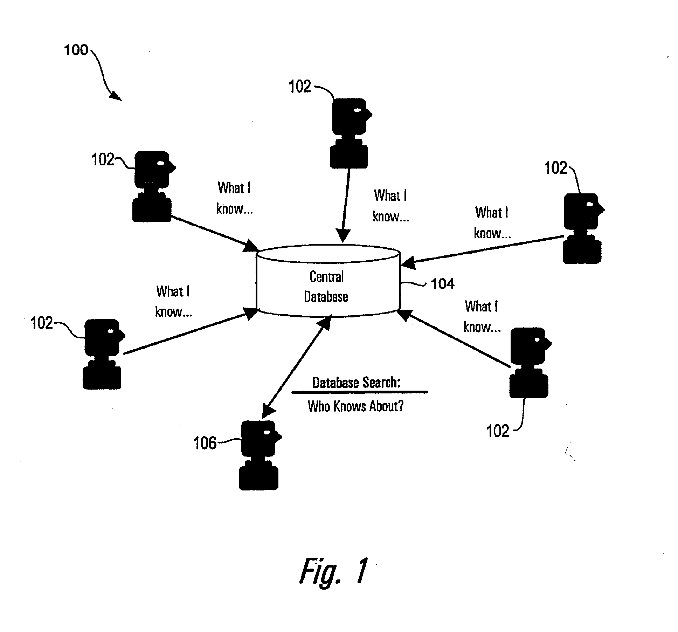

Figure 1 is a dataflow diagram of a conventional knowledge management system 100. In a typical architecture, information providing users 102 explicitly decide what descriptive information they provide to a central database 104. An information seeking user 106 then performs a query on the central database 104 in order to find an information provider who perhaps may be able to answer the seeker's question.

There are several significant problems with such systems. Knowledge management systems, like that shown in Figure 1, require that information providers spend a significant amount of time and effort entering and updating their personal information on the central database 104. For this reasons alone, such systems tend to have very low participation rates. In addition, even those information providers, who take time to enter and update this information, may misrepresent their personal information or level of knowledge and expertise be it willfully or not. Furthermore, they may neglect or be unable to reveal much of their tacit knowledge within their personal description. Tacit knowledge is knowledge a user possesses, but which the user either does not consider important enough to enter, or which they may not even be consciously aware that they know.

Because of the inaccuracy and/or incompleteness of such personal information, information seekers, even after all of their searching efforts, may still find their questions left unanswered, perhaps because the "expert" they identified may not have the bandwidth to respond. Similarly, even information seekers who discover the existence of a relevant K-base may be required to formulate queries which are so complex that they either can not or will not bother to perform a proper search

A second significant problem with knowledge management systems is the information provider's lack of privacy with respect to their personal information stored on the central database 104. No matter what agreements a knowledge management system's central database 104 provider has made with the user, the fact remains that the central database 104 provider still has the user's personal information, which means that that personal information is out of the direct control of said user. As a result, information providers may be unwilling to reveal much about themselves in the presence of a risk that their privacy would be violated. In such systems, the provider must pre-screen all information to be revealed, in order to make sure that the information provided does not contain information which the user would not be comfortable with others having access to. The resulting high participation costs often results in profiles that are stale and lack richness.

Another problem with such systems, is their lack of anonymity. Information seekers and providers cannot remain anonymous while performing queries or asking questions. As such, they may not perform a search, as a question, or wholeheartedly reveal their knowledge about a particular topic in their response to another user's question.

All of the above problems lead to free-riding by many of those using such conventional knowledge management systems. Free-riding occurs when there are information seekers who are not also information providers. They benefit from the information stored on databases, but do not contribute to them. Free-riding tends to make all users worse off, since a knowledge management system's and K-base's value depends upon the richness and fidelity of each users' contributions.

A fourth problem is cost. Conventional centralized systems require the installation of additional hardware dedicated to the knowledge management system and do not make use of otherwise unutilized resources such as the user's own personal computer.

Collaborative filtering techniques also have similar problems. Collaborative filtering is a tool for selectively presenting users with information recommendations based on the collective wisdom of the participant users. Generally these systems require users to actively mark incoming information as relevant or not relevant to their interests. A central system manages this information and attempts to group individuals with similar interests (as expressed by the ratings they assign to pieces of information). Users who seek knowledge in are then directed to information that members like them have indicated as relevant. Due to their centralized nature, these systems lack many privacy features and require heavy active participation by individuals. For this reason collaborative filtering systems frequently do not have access to rich profiles. Additionally, the information that is filtered may not address specific information needs and the user must then wade through the information or perform additional searches and may still find no answer.

In response to the concerns discussed above, what is needed is a system and method for harvesting community knowledge that overcomes the problems of the prior art.

The present invention is a privacy-preserving system and method for knowledge management. The method of the present invention includes a method for receiving and processing messages using scoring techniques which include the steps of: generating a client profile on a client computer; storing the profile on the computer; receiving a message; and scoring the message with respect to the profile.

The method of the present invention also includes a method for receiving and processing messages using filtering techniques which include the steps of: generating a client profile on a client computer; storing the profile on the computer; receiving a message including filtering criteria; and displaying the message on the computer if the filtering criteria is found within the profile.

The method of the present invention further includes a method for generating and obtaining responses to messages using scoring techniques which include the steps of: generating a message; transmitting the message from a sending client to a set of receiving clients; generating a client profile on a receiving client computer; scoring the message with respect to the profile; and displaying the message on a receiving client's computer if the score exceeds a predetermined threshold.

The method of the present invention also includes a method for generating and obtaining responses to messages using filtering techniques which include the steps of: generating a message including filtering criteria; transmitting the message from a sending client to a set of receiving clients; generating a client profile on a receiving client computer; and displaying the message on the receiving client's computer if the filtering criteria is found within the profile.

The system of the present invention, includes all means for implementing the method.

These and other aspects of the invention will be recognized by those skilled in the art upon review of the detailed description, drawings, and claims set forth below.

A number of preferred embodiments of the invention will now be described with reference to the drawings, on which:
Figure 1 is a dataflow diagram of a conventional knowledge management system;
Figure 2 is a dataflow diagram of one embodiment of a system for harvesting community knowledge;
Figure 3 is a flowchart of one embodiment of a method for harvesting community knowledge;
Figure 4 is a pictorial diagram of one embodiment of a "Find An Expert" message within the system;
Figure 5 is a pictorial diagram of one embodiment of a "Survey/Poll" message within the system;
Figure 6 is a pictorial diagram of one embodiment of a "Survey/Poll Results" window within the system;
Figure 7 is a pictorial diagram of one embodiment of a "Software Announcement" message within the system;
Figure 8 is a pictorial diagram of one embodiment of an "Ask Anonymous" message within the system;
Figure 9 is a pictorial diagram of one embodiment of an "Advanced Question" message within the system;
Figure 10 is a dataflow diagram of one embodiment of a portion of a Peer-To-Peer network for connecting clients within the system;
Figure 11 is a pictorial diagram of one embodiment of a "Messages In-Box" window within the system; and
Figure 12 is a pictorial diagram of one embodiment of a "Basic Response" window within the system.

The present invention provides a mechanism for publicly, privately, or anonymously providing information to and harvesting information from a community of users and information resources. By preserving the privacy of users and their profiles, the present invention allows for the use of automatic profiling methods. These automatic methods eliminate a need for community members to laboriously maintain their own profiles in order to efficiently participate in the knowledge community. As a result, users' profiles are a rich body of information, and users do not face high participation costs. The invention also allows for anonymous questions and responses which further provides incentives for users to participate. As a result, the present invention ameliorates the free-riding problem, and creates a low-cost, useful, user-friendly environment for knowledge sharing and expertise exchange.

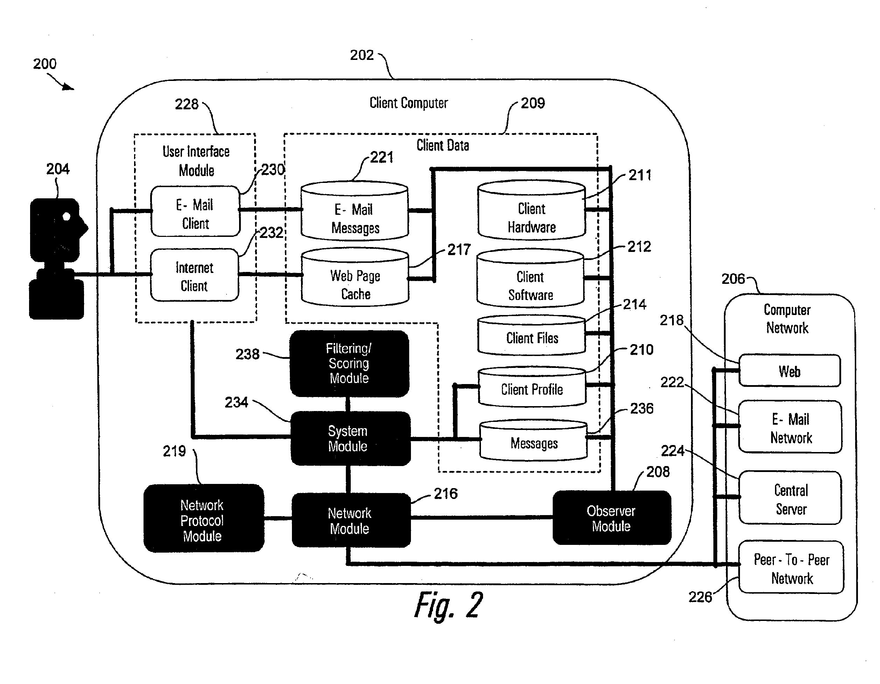

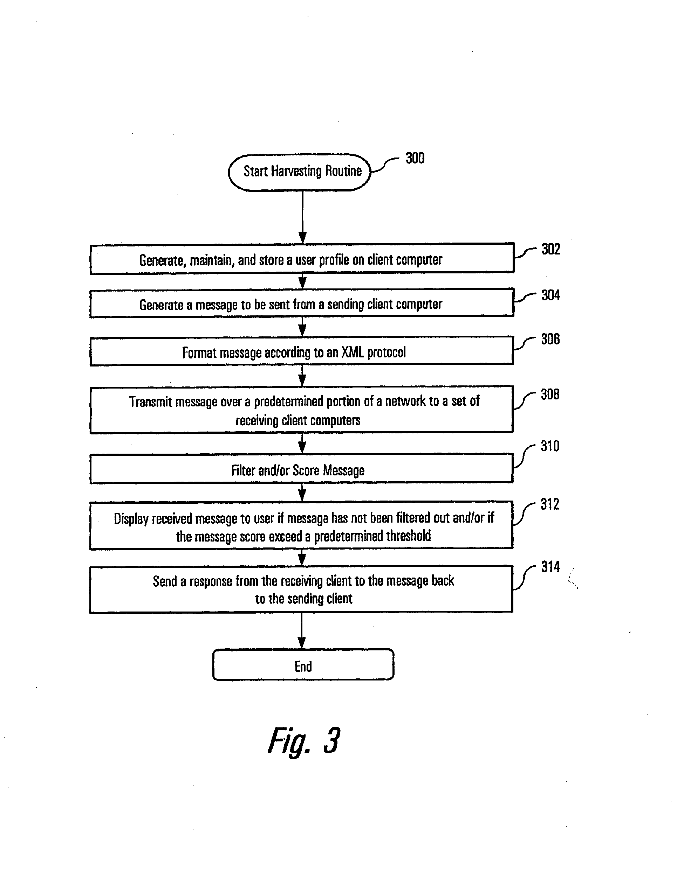

Figure 2 is a dataflow diagram of one embodiment of a system 200 for harvesting community knowledge. Figure 3 is a flowchart of one embodiment of a method 300 for harvesting community knowledge. Figures 2 and 3 are herein discussed together. The system 200 includes a client computer 202 under the control of a user 204, and connected to a computer network 206. The client 202 both sends and receives messages respectively to and from other client computers and information sources via the network 206. When a client computer generates and sends a message such client computer is herein alternately called *a sending client,* and when a client computer receives a message, such client computer is herein alternately called *a receiving client.* Preferably all client computers on the network include the same functionality, which is now described with respect to the client computer 202, however some receiving clients may not currently have the present invention's software installed.

### User Profiling

The method 300 begins with an observer module 208 generating and maintaining a client profile 210 on the client computer 202, in step 302. The observer module 208 begins a process of generating and maintaining the client profile 210 by monitoring and collecting data with respect to both internal and external computer 202 information and operations. Internal data includes: user 204 behavior on the computer 202, installed client hardware 211, installed client software 212, and locally stored client files 214. External data includes: a web page cache 217 populated through internet client 232 interactions with web 218 sites, and e-mail messages 221 populated through e-mail client 230 interactions with an e-mail network 222. User operations, in addition to the term's normal meaning, is herein defined to include together or in the alternative: user behavior on the client computer 202; any information about the user; any information about the client computer 202; and/or any information about the computer's 202 interaction with the network 206.

During the monitoring process, selected data is captured, processed, and added to the client profile 210. The selected data is then automatically analyzed and formatted for storage in the client profile 210. Thus, the observer module 208 relieves the user 204 from having to manually describe themselves to other users on the network 206. This dramatically reduces the participation costs for all users of the present invention, while ensuring that the client profile 210 is constantly kept up to date. Thus the client profile 206, as generated and maintained by the present invention, serves as a very rich and detailed data structure for enabling the user 204 to efficiently and equitably participate in an information market.

In order to maximize the user's 204 privacy and thereby encourage broad user participation within the information market, the client profile 210 is preferably stored only on the client computer 202, however the profile 210 may also be stored remotely either in encrypted or password protected form and viewable only by the user 204. Also to toward this goal, the user 204 is also preferably given an option of erasing their client profile 210, or having the observer 208 rebuild a new client profile for the user 204.

### Message Generation

Next to be described is a system and method for generating messages in step 304 using the present invention. Messages are herein defined to include a wide variety of communications known to those skilled in the art, including any communication seeking, sending, and/or culling information from an information market. Thus messages can include questions, announcements, and/or information processing routines.

To begin, the user 204 accesses a user interface module 228. The user interface module 228 preferably includes a set of software modules for interfacing with the user 204. Such modules at a minimum include the e-mail client 230, which stores a predetermined set of e-mail messages 221, and the Internet client 232, which stores information in the web page cache 217. These two modules 230 and 232 provide the user 204 with alternate ways of using the present invention and preferably, both contain similar functionality, such as text windows and folders for storing messages both sent and received.

Through the user interface module 228, the user 204 initiates the message generating process, such as by clicking on an "Ask a Question" button in a toolbar within the user interface. In response, the user interface module 228 displays a number of pre-defined message types, described below, to the user 204.

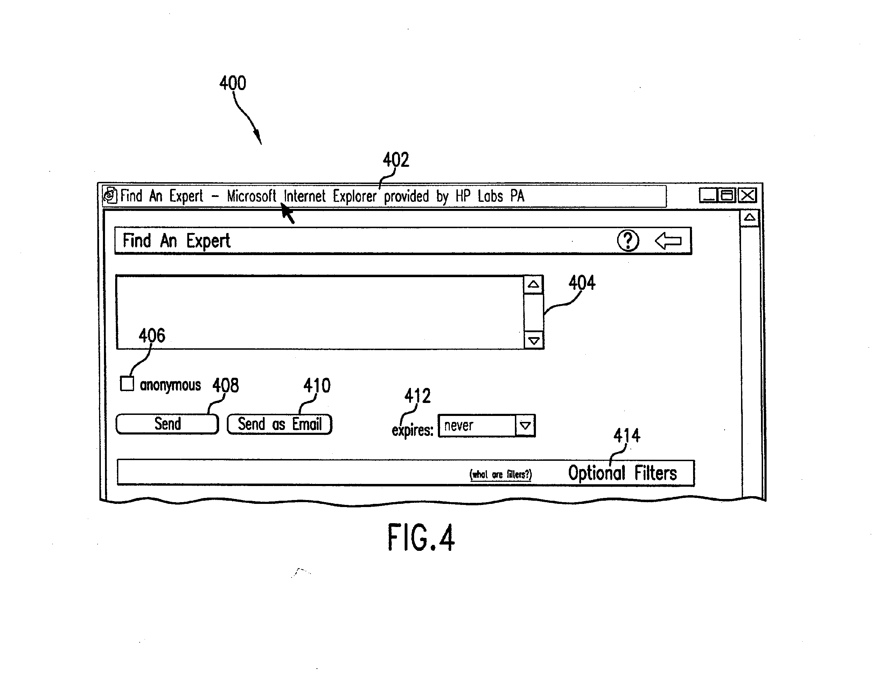

Figure 4 is a pictorial diagram 400 of one embodiment of a "Find an Expert" message 402 within the system 200. The find an expert message 402 is likely to be one of the more popular questions asked by the user 204. In this embodiment, the find an expert message 402 is also the most generic message type upon which all other message types are built. The find an expert message 402 includes a message field 404, an anonymous check box 406, a send button 408, a send as e-mail button 410, an expires field 412, and an optional filters field 414. Note that the anonymous check box 406, send button 408, send as e-mail button 410, expires field 412, and optional filters field 414, while herein discussed with respect to the find an expert message 402, are also preferably included within all message types of the present invention.

The message field 404 collects information provided by the user 204 which the user believes will help the present invention direct the message to receiving clients likely to be able to either answer the user's 204 question or be apprised of the user's 204 interest in some knowledge area and inviting further communication. The more detail the user 204 provides in the message field 404, the better directed will be the message to an appropriate set of receiving clients.

The anonymous check box 406, if left unchecked, permits information identifying the user 204 to be sent with the message 402 over the network 206. However, if the anonymous check box 406 is checked by the user, the message will be sent only over a peer-to-peer network 226, using randomization, without any information explicitly identifying the user's identity. Thus, user's have control over revealing their identity to other users on the network 206.

The send button 408 initiates transmission of the message 402 over a predetermined set of resources within the network 206. In most instances the send button 408 will initiate transmission of the message 402 only over the peer-to-peer 226 network, however the message 402 may also be sent to other network resources depending upon the particular implementation of the present invention.

The send as e-mail button 410 initiates transmission of the message 402 over only the e-mail network 222. In order to use this feature, a set of e-mail receiving clients must be predefined either by the user 204 or by a system administrator. The usefulness of the send as e-mail button 410 is that a wider set of message receiving clients may be targeted, which goes beyond those who have the present invention installed within their respective client computers. Such a wider set of receiving clients will not benefit from all of the present invention's functionality, but will at least be able to see the message 402 sent by the user 204. Preferably, those who do have the present invention installed however, will process the message 402 in a same manner as if the user 204 had selected the send button 408.

The expires field 412 contains time period information which controls transmission of the message 402 over the network 206. Depending upon the particular implementation of the present invention, settings in the expires field 412 may either: place a time limit on a number of times a network module 216, or some other resource on the network 206, such as a dedicated server, transmits the message 402 over the network 206; or place a time limit on how long the user 204 will permit receipt of responses to the message 402 from other users. For example, messages which invite others to a meeting could have their expires field set to the start time of the meeting.

The optional filters field 414 permits the user 204 to target the message 402 to a set of receiving clients satisfying one or more filtering conditions. Details of how the optional filters field 414 affects transmission and processing of the message 402 are provided below.

There are countless applications of the find an expert message 402. For instance, those who conduct public opinion polls or seek to forecast uncertain often find it difficult to locate an appropriate set of participants to be solicited for their opinion. Using the find an expert message 402 however, potential participants whose client profiles match well with the message's content and filters can be easily identified and solicited for their opinions. Thus the present invention targets potential participants much more effectively than simply posting an announcement on a bulletin board or sending an announcement out to a general distribution list. Such conventional posting or sending techniques are often not be read by a relevant set of potential participants and tend to annoy all the others who are not interested in the subject.

Another example of the find an expert message's 402 usefulness is also apparent when new employees are hired. Typically, new employees often find it impossible to know what procedures to follow or whom to contact in order to get something accomplished. Using the find an expert message 402, however, a new employee can easily ask a question using the message 402, which will then be routed to those with the expertise to answer the message.

Other applications of the find an expert message 402 include finding a doctor who is a medical expert on a particular disease or condition, finding a specialist within a military environment, and finding individuals within a large bureaucracy, such as the government, who is responsible for a particular bureaucratic function.

Note that while these examples were given with respect to the find an expert message 402, the other messages described below may also be used.

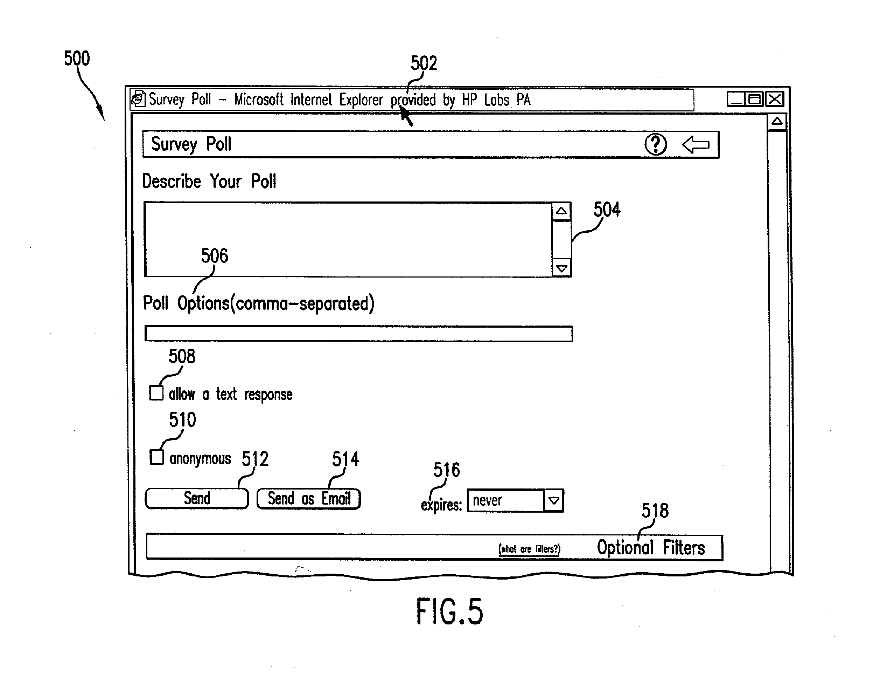

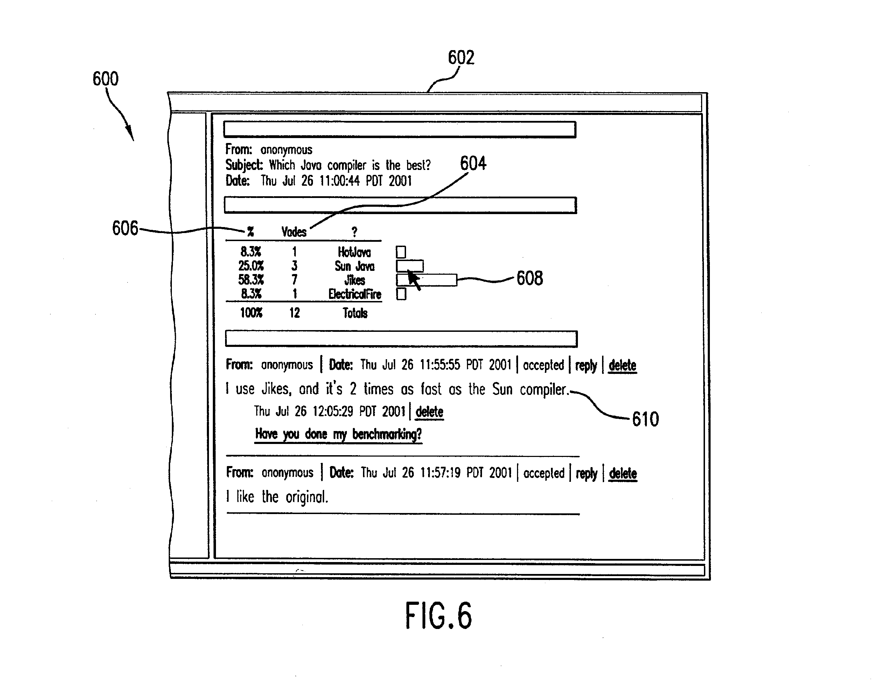

Figure 5 is a pictorial diagram 500 of one embodiment of a "Survey/Poll" message 502 within the system 200, and Figure 6 is a pictorial diagram 600 of one embodiment of a "Survey/Poll Results" window 602 within the system 200. Figures 5 and 6 are herein discussed together. The survey/poll message 402 includes a poll description field 504, a poll options field 506, an allow a text response check box 508, an anonymous check box 510, a send button 512, a send as e-mail button 514, an expires field 516, and an optional filters field 518.

The describe your poll field 504 provides a data structure for the user 204 to enter in a description of the survey/poll and phrase one or more questions for message receiving clients to respond to. The more detail the user 204 provides in the describe your poll field 504, the better directed will be the message to an appropriate set of receiving clients who can intelligently respond to the survey/poll.

The poll options field 506 provides a data structure for allowing the user 204 to enter a fixed list of poll response options, from which message receiving clients may quickly select one or more, depending upon the user's 204 directions in the describe you poll field 504. For example, if the user 204 asks the question, "Which is the fastest Java virtual machine?" in the describe your poll field 504, the user 204 would then list the possible answers, such as "TurboChai, Sun JDK 1.1, Sun JDK 1.3 w/Hotspot," in the poll options field 506.

The allow a text response check box 508 is selected by the user 204 if in addition to having message receiving clients select from one of the poll options, the user 204 would also like more detailed feedback from the message receiving clients.

As discussed above, the anonymous check box 510, the send button 512, the send as e-mail button 514, the expires field 516, and the optional filters field 518, preferably operate with the same functionality described with respect to the find an expert message 402.

Upon receipt of responses from other users on the network 206, a system module 234 within the client computer 202 tabulates and presents the survey/poll results in a meaningful format. For example, the survey/poll results window 602 presents the results to the "Which is the fastest Java virtual machine?" survey/poll in a raw format 604, a percentage format 606, and as a bar chart 608. In this example, the user 204 selected the allow a text response field 508 and thus message receiving client's text responses 610 are also provided within the window 602. Thus the survey/poll message 502 encourages and easily facilitates large-scale votes that take advantage of a community's collective knowledge in a highly personal way.

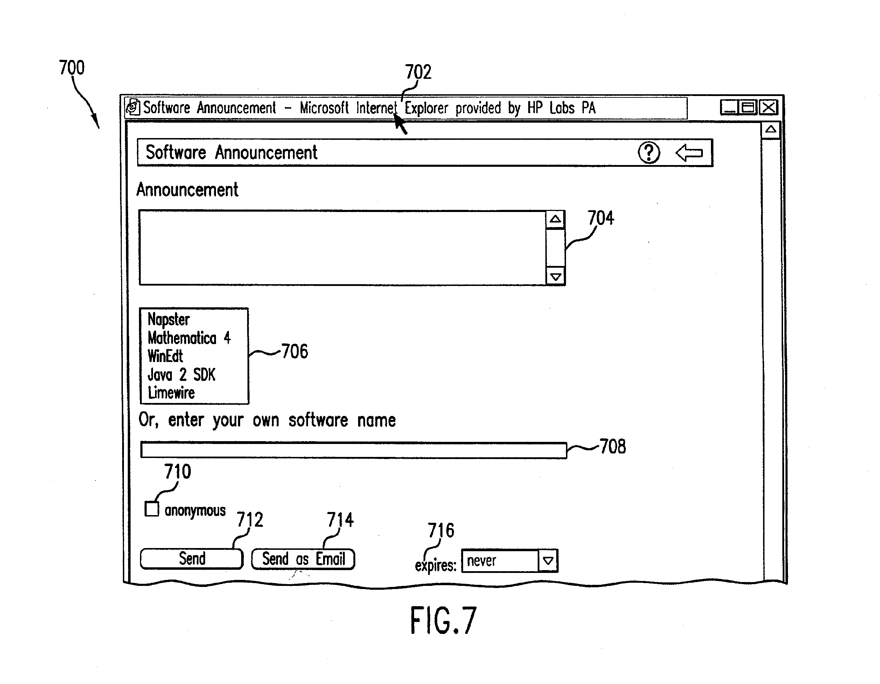

Figure 7 is a pictorial diagram 700 of one embodiment of a "Software Announcement" message 702 within the system. The software announcement message 702 includes an announcement field 704, an installed software field 706, a enter your own software field 708, an anonymous check box 710, a send button 712, a send as e-mail button 714, an expires field 716, and an optional filters field (not shown).

The announcement field 704 provides a data structure for the user 204 to enter in a description of an announcement to be sent to other users on the network 206 who either have a particular software or process installed on their client computers. The installed software field 706 contains a fixed, but expandable, list of software from which the user can select, and which will cause the announcement message 702 to be sent preferably only to those other users who have the selected software installed on their client computers. Other users on the network 206, who do not have the selected software installed, preferably will not receive the announcement message 702. The enter your own software field 708 allows the user 204 to enter in a particular software name which in effect adds to the installed software field 706 and causes the software announcement message 702 to be in the same way. As discussed above, the anonymous check box 710, the send button 712, the send as e-mail button 714, the expires field 716, and the optional filters field (not shown), preferably operate with the same functionality described with respect to the find an expert message 402.

Also, while not shown, a similar "Hardware Announcement" message may be generated whereby if the client hardware database 211 within a receiving client computer lists a particular hardware device, then the hardware announcement message would be brought to the attention of that receiving client.

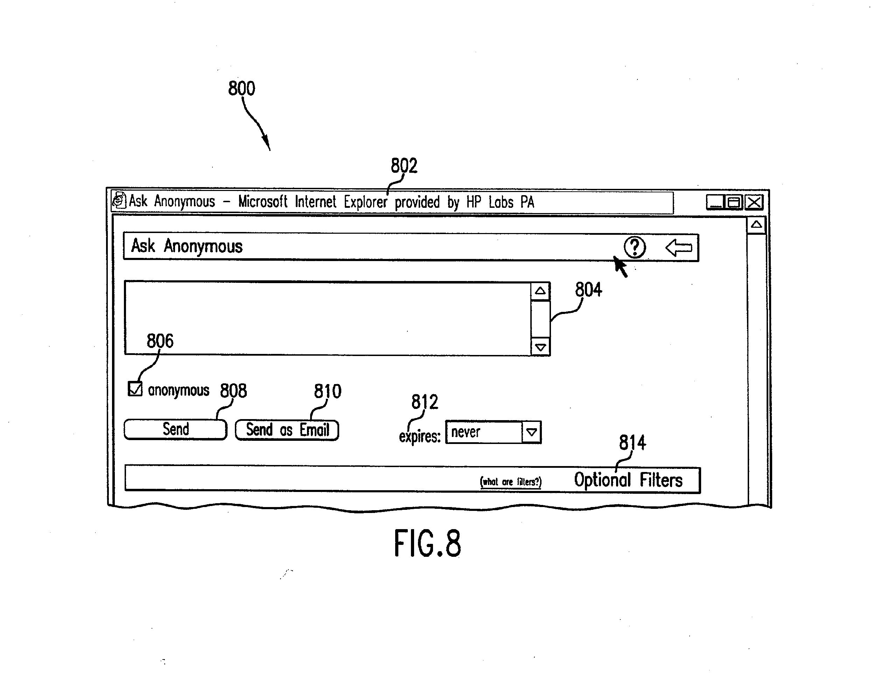

Figure 8 is a pictorial diagram 800 of one embodiment of an "Ask Anonymous" message 802 within the system. The ask anonymous message 802 includes a message field 804, an anonymous check box 806, a send button 808, a send as e-mail button 810, an expires field 812, and an optional filters field 814. The ask anonymous message 802 and fields function is the same way as the find an expert message 402, and preferably differs only in that the anonymous check box 806 is pre-selected.

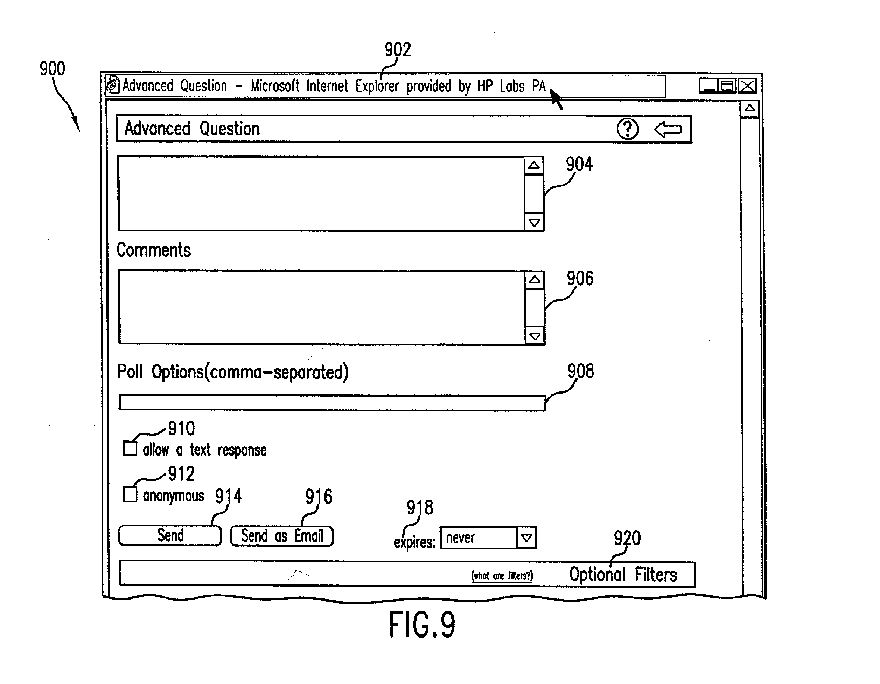

Figure 9 is a pictorial diagram 900 of one embodiment of an "Advanced Question" message 902 within the system. The advanced question message 902 includes a message field 904, a comments field 906, a poll options field 908, an allow a text response field 910, an anonymous check box 912, a send button 914, a send as e-mail button 916, an expires field 918, and an optional filters field 920. The advanced question message 902 is a combination of all the other messages 402, 502, 702, and 802. For example, the message field 904, the anonymous check box 912, the send button 914, the send as e-mail button 916, the expires field 918, and the optional filters field 920, preferably operate with the same functionality described with respect to the find an expert message 402. The poll options field 908, and the allow a text response field 910, preferably operate with the same functionality described with respect to the survey/poll message 502. The comments field 906 allows the user 204 to enter textual and/or other information which is sent by the sending client computer with the message 902 but which is preferably not filtered and/or scored at the receiving client computer.

Those skilled in the art know that the message types just described are but a subset of all possible message types that may be added to and function with the present invention. In addition, the functionality which has been described within each of the message types may also vary depending upon a particular implementation of the present invention. After a message has been generated it is preferably assigned a globally unique identifier and stored in a messages database 236. A private-public key pair is preferably generated for each new message. The public key is then sent with the message so that a receiving client can encrypt their response, ensuring that only the user 204, having the corresponding private key, can decrypt and view such response. This provides a further level of security and privacy within the present invention.

The network module 216 periodically scans the message database 236 for new messages generated by the user 204. Then in step 306, a network protocol module 219 formats the new message according to an XML (Extensible Markup Language) protocol for transmission by the network module 216 over the network 206. Both a client computer sending the message and a client computer receiving the message must be apprised of the particular XML protocol used to format the message, in order for communication to occur.

Preferably the XML protocol is both unique and confidential, so that only a predetermined set of client computers on the network 206 may decode and present associated users with an opportunity to respond to the message. By limiting the scope of users allowed to see messages, a baseline level of confidentiality, expertise, and/or message response integrity may be maintained. For instance, the scope of users may be limited to only those who are employed within a particular enterprise, who belong to a particular professional society, or who are students and one or more universities. The exact scope of users will thus depend upon a particular application of the present invention.

In alternate embodiments, messages may be transmitted over global e-mail and/or web networks, but in an encrypted format which again limits the scope of users. In other embodiments, there may be no limits on the scope of users who may be given an opportunity to respond to the messages.

### Message Transmission

Next in step 308, the network module 216 transmits the message over a predetermined portion of the computer network 206. As will be discussed below, messages transmitted over the peer-to-peer network 226 achieve a high level of anonymity, however many messages will likely be transmitted over the e-mail network 222 or displayed on a web 218 site in order to advertise the present invention and thereby build-up the peer-to-peer network 226.

As mentioned above, when the computer client 202 transmits a message over the network 206 it is called a sending client, while when the computer client 202 receives a message over the network 206 it is called a receiving client. Thus in normal operation, all client computers function as both sending and receiving clients.

The present invention thus encourages a high level of participation and sharing of expertise by permitting users to maintain privacy and anonymity. User privacy is preserved by storing the user's 204 client profile 210 preferably only on the client computer 202 thereby encouraging users to permit the building of very rich profiles which go far beyond those users would otherwise voluntarily disclose to a central database. User anonymity is preserved by transmitting messages over the peer-to-peer network 226.

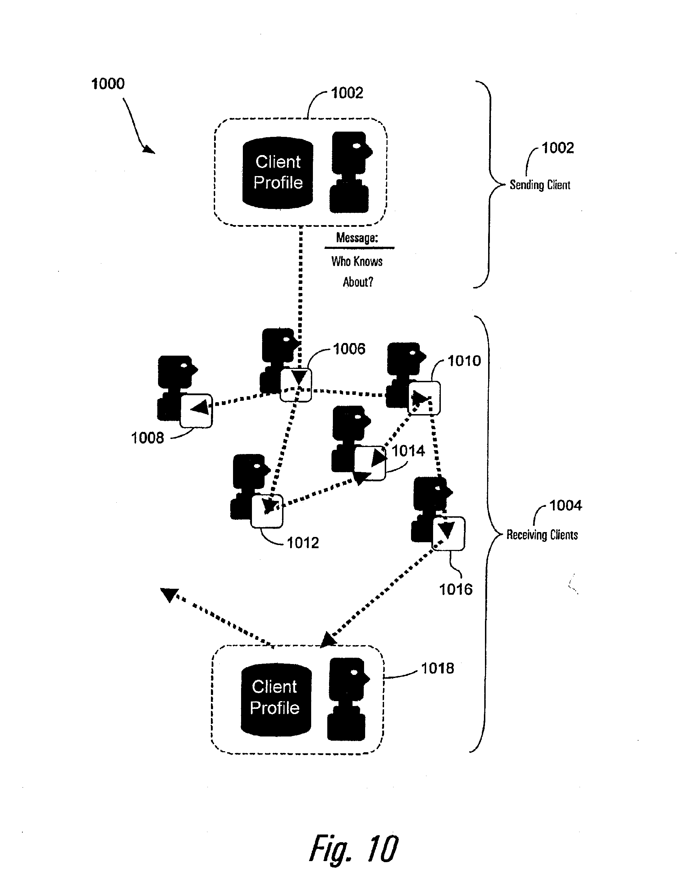

Figure 10 is a dataflow diagram of one embodiment of a portion of a peer-to-peer network 1000 for connecting clients within the system 200. The network 1000 includes a sending client 1002 and a set of receiving clients 1004. The peer-to-peer network is created when the sending client 1002 accesses a list of other client computers known to be configured for peer-to-peer communication. In order to expand upon the list of other client computers known to be configured for peer-to-peer communication, the sending client 1002 can also ask its known peers, such as receiving client 1006, for their lists of other client computers, thereby discovering additional peers who may be available for connection.

The sending client 1002 randomly selects from this list and establishes connections according to a predetermined protocol. In the embodiment shown, the sending client 1002 has connected to receiving client 1006. Similarly, the receiving client 1006 has connected to receiving clients 1008, 1010, and 1012 and so on.

In peer-to-peer networks, when a message is sent out each peer that receives the message forwards it to its neighboring peers, except in the cases that it has been already transmitted to that peer. The topology is random and depends on which peers each client is currently actively connected to. This randomization is the mechanism which creates anonymity for all of the peers, since when a peer receives a message, that peer cannot be sure if the client computer from which it received the message originated the message.

The number of peers to which the message is exposed can be varied depending upon how the present invention is implemented. In one embodiment, all active peers can be sent every question. In another embodiment, the message may only be sent to a horizon line of the sending peer. Preferably, each message can be forwarded only a predetermined number of times before it is dropped. This could be implemented by adding a time-to-live (TTL) parameter to each sent message which indicates the number of hops the message can take. After each hop, the TTL is decremented by one so that when the TTL reaches zero, the last receiving client will no longer forward the message on to other clients. Those skilled in the art will know of other embodiments for transmitting the message over networks.

In the embodiment shown, the message is broadcast from the sending client 1002 to a first tier of receiving clients, which includes receiving client 1006 as well as others which are not shown. The message is then broadcast from the receiving client 1006 to a second tier of receiving clients, which includes receiving clients 1008, 1010, and 1012 as well as others which are not shown. The message is then again broadcast from the receiving clients 1008, 1010, 1012 to a third tier of receiving clients, which includes receiving clients 1014, and 1016. Continuing, receiving client 1016, as well as others in the third tier, broadcasts the message to a fourth tier of receiving clients, including receiving client 1018, and so on and on. As can be deduced from this brief description, the message is transmitted so many times by so many different peers that a high level of anonymity is assured.

Each receiving client receives the message through their respective network modules, like network module 216. System modules within the receiving clients, like system module 234, store the message in their respective messages database, like messages database 236. Due to normal peer-to-peer network 226 topology, should said receiving clients receive the message again, their respective system modules will check their message databases for a copy of the message. If said copy exists, the system modules will prevent their network modules from sending out the message again. This eliminates excessive message traffic over the network 206.

Even though, message transmission via the peer-to-peer network 226 is preferred, the present invention's functionality is also compatible with message transmission over other networks within the overall computer network 206.

For example, the message may be sent over the e-mail network 222. Messages sent over the e-mail network 222 may also include a sending client's message in both the body of an e-mail message, as well as encoding the message according to the predetermined XML protocol by which users of the present invention communicate.

When the sending client's anonymity is not important, the message may be sent directly from the computer 202 to an individual or to an entire distribution list. Otherwise, if the sending client's anonymity is important, the user can create a message and list the individuals and/or distribution lists the user wants the message to eventually be delivered to. However, instead of sending the message directly from the computer 202 to the e-mail network 222, the computer 202 instead sends the message over the peer-to-peer network 226 with a time-to-live value, which when the value reaches zero, a last receiving client to receive the message directly transmits the message over the e-mail network 222 with a note that this last receiving client was not the author who originated the message.

The e-mail network 222 may even be a preferred way to send invitational messages during the initial stages of implementing the present invention. This is because in order to ensure a high level of anonymity over the peer-to-peer network 226, there must be a relatively large number of peers. But since a pre-selected group of client computer user may have permission to install the present invention's software, not all of such users' client computers may have the present invention's software installed, invitational as well as other messages sent over the e-mail network 222 may help inform such pre-selected users of the present invention's functionality and usefulness. A textual notice and a link informing receiving clients how to install the present invention's software would preferably also be added to the message so that an embedded XML message can be decoded and processed according to the present invention's functionality.

Regardless of over which network portion the message is sent, each receiving client having the present invention installed stores a copy of the XML encoded message in their respective messages database.

### Message Filtering and Scoring

For purpose of the discussion to follow, functionality within the client computer 202 for processing received messages is discussed as if the client computer 202 was one of the receiving client computers. Such a context switch is appropriate because preferably each client computer contains a complete and self contained version of the present invention's software. Thus in step 310, the system module 234 within the client computer 202 retrieves and commands a filtering/scoring module 238 to filter and score newly received messages which have been stored in the messages database 236.

In order to perform any necessary filtering and scoring, the filtering/scoring module 238 primarily relies upon the information stored in the user's 204 client profile 210. If necessary however, the filtering/scoring module 238 may also tap data stored elsewhere in the client computer 202, such as in the e-mail client 230, the e-mail messages 221, the internet client 232, the web page cache 217, the client software 212, the client files 214, and the client messages 236.

A received message is filtered by the filtering/scoring module 238 when such message contains a predetermined sent of criteria, inserted by the message sending client, in order to target selected receiving clients. Such filtering criteria is preferably very flexible and is left at the discretion of the sending client user. For example, the filtering criteria may look for a particular data string, or at some other information within a receiving client's client profile 210.

In an alternate embodiment however, a client profile 210 which does not meet the filtering criteria merely results in a low message score. In this way, a message which does not meet the filtering criteria does not automatically prevent the user 204 from seeing the message. In such embodiments an overall weighted average score may be generated which depends upon not only all of the filtering criteria, but also the message's score. How the message's score is generated is discussed next.

The filtering/scoring module 238 preferably scores messages using statistical information retrieval techniques, including linguistic analysis. Information retrieval techniques are commonly known to be used for accessing and analyzing large blocks of data and then extracting all or selected portions of such data according to a wide variety of methods. Other techniques are also known to those skilled in the art.

While the above filtering and scoring discussion assumes the message was received over the peer-to-peer network 226, messages received over the e-mail network 222 as well as by other paths within the network 206 are similarly filtered and scored if the receiving client has the present invention's software installed.

For example, receiving clients who have the present invention's software already installed and have received an e-mail message containing an embedded XML message, have a copy of the embedded message placed in their messages database 236 so that the message can be filtered and scored. Receiving clients who do not have the present invention's software installed, however, only see the e-mail message in their standard e-mail inbox, and no other processing is performed.

Thus the filtering and scoring techniques of the present invention in combination with the rich client profiles stored on each receiving client's computer are together what enable messages to be brought to the attention of the right set of users.

Such intelligently targeted messaging, however, also builds user confidence in and reliance on the present invention. This is because unlike in conventional systems where users often have to wade though in-boxes full of junk or marginally useful e-mail, users using the present invention generally know and rely on the fact that their time will not be wasted on such unimportant messages. Instead users of the present invention will be even more likely to timely respond to messages received because the messages will be so on-point to their expertise and/or interests.

For example, in the past when a sending client needed to identify appropriate participants to participate in an experiment, or submit papers for a seminar, the user would clumsily post an advertisement on a web or other site, and/or send out a generalized e-mail to a very large distribution list. In such cases, targeted users often miss the importance of or are annoyed by such communications which are buried in a sea of information they already are trying to sift through. In contrast, the present invention automatically performs the necessary sifting so that if a user receives a message using the present invention, such message will be useful to them.

### Message Display and Response

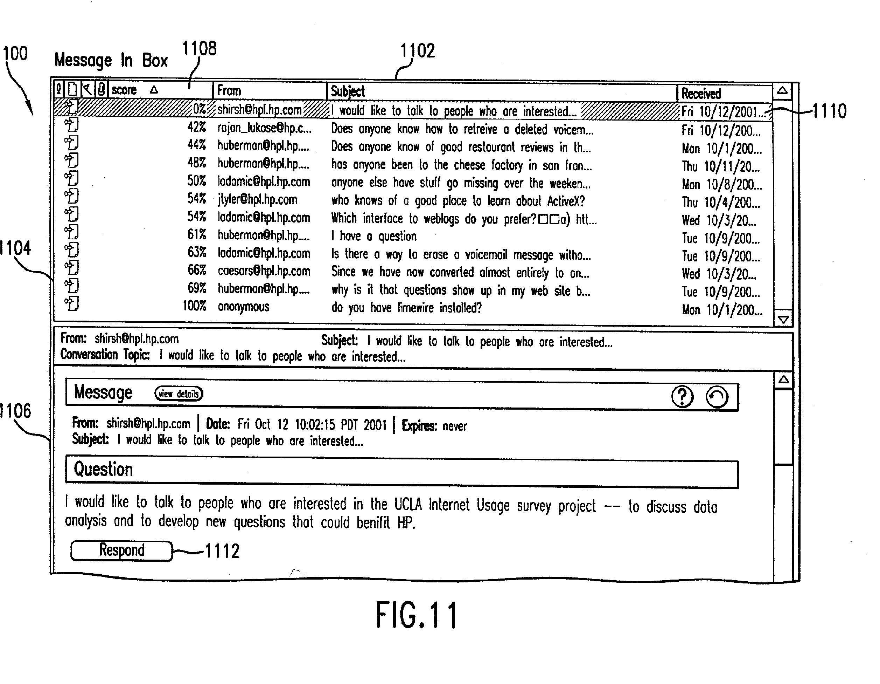

Figure 11 is a pictorial diagram 1100 of one embodiment of a "Messages In-Box" window 1102 within the system. The in-box window 1102 is displayed by the user interface module 228 to the user 204. Depending upon how the user 204 has configured the user interface module 228, the in-box window 1102 will be displayed either in an e-mail format by the e-mail client 230 or in a web format by the internet client 232. Both formats preferably provide similar functionality.
The in-box window 1102 includes a received messages portion 1104 and a message viewing portion 1106. Within the received messages portion 1104 each message can be sorted by its score within a score field 1108. As discussed above, the score represents a likelihood that the user 204 will find the message relevant to or within the expertise of the user 204.

The user 204 preferably can configure the in-box window 1102 to display within the messages portion 1104 messages having a score which exceeds a predetermined threshold. Thus in step 312, the received message is displayed to the user 204 if the message has not been filtered out and/or if the message score exceeds the predetermined threshold.

Preferably the user 204 is permitted to replace the score field 1108 with a flag field so that relevant messages which exceed the predetermined threshold can be "flagged." Alternatively, the user interface module 228 may be configured to present messages to the user 204 by a pop-up dialog window even when the user 204 is currently using a different application program on the client computer 202. Those skilled in the art will know of other ways of presenting messages to the user 204.

After the user 204 selects one of the messages 1110, the selected message 1110 is preferably displayed within the message viewing portion 1106 of the in-box window 1102. The message viewing portion 1106 preferably includes a respond button 1112.

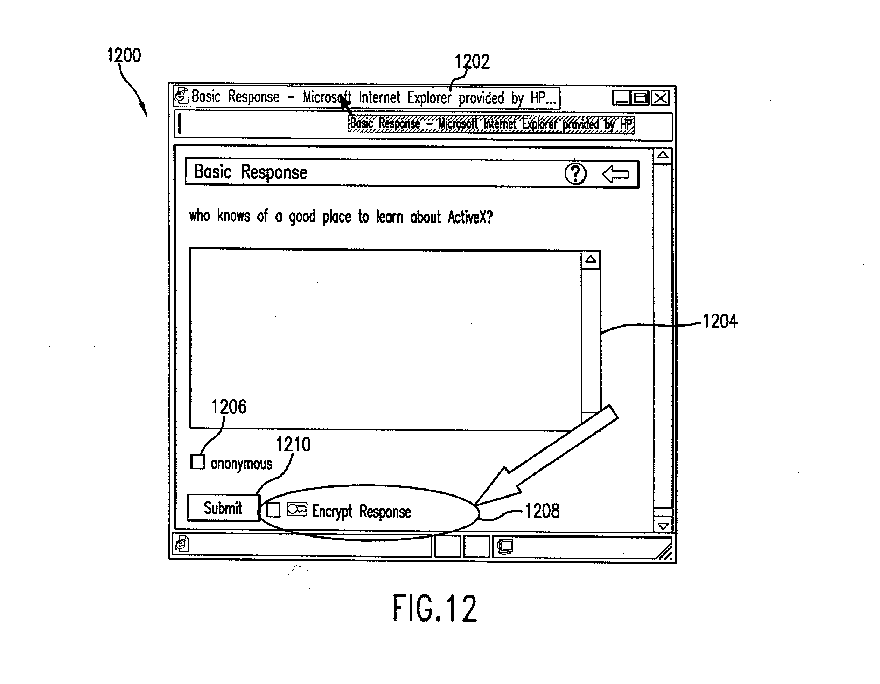

Figure 12 is a pictorial diagram 1200 of one embodiment of a "Basic Response" window 1202 within the system. The response window 1202 is created when the user 204 "clicks" on the respond button 1112. The response window 1202 includes a message field 1204, an anonymous check box 1206, an encrypt response check box 1208, and a submit button 1210. The message field 1204 provides a data structure for collecting the user's 204 response to the selected message. The anonymous check box 1206, if selected, masks the user's 204 identifying information (e.g. e-mail address) in the response and sends the message back to the sending client over the peer-to-peer 226 network. If the user 204 would like to reveal their identity to the message sending client the anonymous check box 1206 should not be checked.

The encrypt response check box 1208 if checked encrypts the message field 1204 with the public key of the sending client which is preferably sent along with each message and response transmitted over the network 206, as discussed earlier. In this way only the message sending client will be able to use their private key to decrypt the response. Otherwise if the encrypt response check box 1208 is not checked, other client computers on the network 206 will be able to monitor and filter and/or score the conversation between the sending and receiving clients. The submit button 1210 is then clicked in order to send the response over the network 206. Thus in step 314 a response from the receiving client is sent to the sending client anonymously or in an encrypted format. Optionally, if the receiving client knows the sending client's identity, the response can be sent directly back to the sending client. After step 314 the preferred method ends.

### Processing Information From Other Sources Using The Present Invention

While the present invention has been discussed with respect to the generation, transmission and response to messages, the present inventions' scoring functionality is equally applicable toward processing other types of information as well. Other information includes data displayed within a current web page being viewed by the user 204. A relevance vector could be generated from said web page data and compared to the user's 204 expertise vector generated from the client profile 210. User's would be notified of a particular relevance of the currently viewed web page if the relevance and expertise vectors when compared yield a score which exceeds a predetermined threshold. In this way user's browsing the web could be apprised of particular web pages which may closely align with their interests and/or expertise.

Other information similarly processed and scored may include: normal e-mail messages which have not been generated using the present inventions' functionality; files downloaded from the central server 224 or received from some other source; or expertise information stored on a central enterprise database. Those skilled in the art will know of other information sources to which the present invention may also be successfully applied.

While one or more embodiments of the present invention have been described, those skilled in the art will recognize that various modifications may be made. Variations upon and modifications to these embodiments are provided by the present invention, which is limited only by the following claims.

## Claims

1. A method for knowledge management, comprising:
generating a client profile (210) on a client computer (202);
storing the profile on the computer;
receiving a message; and
scoring the message with respect to the profile.

2. The method of claim 1 wherein the storing element includes:
permitting only a user (204) to display the profile.

3. The method of claim 1 or 2 wherein the receiving element includes:
receiving the message over a peer-to-peer network (226).

4. The method of any preceding claim wherein the scoring element includes:
scoring message using statistical information retrieval techniques.

5. The method as claimed in any of claims 1 to 3 wherein the scoring element includes:
identifying a filtering criteria within the message;
associating a first value with those filter criteria found within the profile;
associating a second value, which is lower than the first value, with those filter criteria not found within the profile;
assigning a weighted percentage to the message score and each filter criteria; and
calculating an overall message score by combining the weighted percentages.

6. A method for knowledge management, comprising:
generating a message including filtering criteria;
transmitting the message from a sending client (1002) to a set of receiving clients (1004);
generating a profile (210) on a receiving client computer (1006); and
displaying the message on the receiving client's computer if the filtering criteria is found within the profile.

7. The method of claim 6 wherein the transmitting element includes:
transmitting the message over a peer-to-peer network (226).

8. The method of claim 6 wherein the transmitting element includes:
transmitting the message over an e-mail network (222).

9. The method as claimed in any of claims 6 to 8:
wherein the generating element includes,
adding a data string filtering criteria to the message; and
wherein the displaying element includes,
displaying the message on the receiving client's computer if the data string is found within the profile.

10. The method as claimed in any of claims 6 to 8:
wherein the generating element includes,
generating a sending client public-private key pair; and
adding the sending client public key to the message;
wherein the method further comprises,
receiving a response to the message from the receiving client's computer which has been encrypted by the sending client public key; and
decrypting the response using the sending client private key.
